(19) Europäisches Patentamt
European Patent Office
Office européen des brevets

(11) **EP 1 432 764 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(21) Anmeldenummer: **02800580.9**

(22) Anmeldetag: **27.09.2002**

(51) Int Cl.:
**C08L 75/04** (2006.01)    **C08K 5/11** (2006.01)
**B01F 17/00** (2006.01)

(86) Internationale Anmeldenummer:
**PCT/EP2002/010859**

(87) Internationale Veröffentlichungsnummer:
**WO 2003/031517 (17.04.2003 Gazette 2003/16)**

(54) **DISPERGATOR-ZUSAMMENSETZUNGEN**

DISPERSANT COMPOSITIONS

COMPOSITIONS DISPERSIVES

(84) Benannte Vertragsstaaten:
**BE DE ES GB IT NL**

(30) Priorität: **06.10.2001 DE 10149384**

(43) Veröffentlichungstag der Anmeldung:
**30.06.2004 Patentblatt 2004/27**

(73) Patentinhaber: **Cognis IP Management GmbH
40589 Düsseldorf (DE)**

(72) Erfinder:
- **SCHIEFERSTEIN, Ludwig
  40882 Ratingen (DE)**
- **SCHULTE, Heinz-Günther
  45481 Mülheim (DE)**
- **GORZINSKI, Manfred
  40227 Düsseldorf (DE)**
- **HIRSCH, Christina
  40627 Düsseldorf (DE)**

(56) Entgegenhaltungen:
**EP-A- 0 130 089    EP-A- 0 318 999**

**Beschreibung**

**Gebiet der Erfindung**

Die Erfindung betrifft bei 25° C flüssige und gießbare Dispergator-Zusammensetzung für Lackrezepturen auf der Basis eines speziellen Trägermediums und eines Dispergators auf Polyurethan-Basis.

**Stand der Technik**

Dispergatoren werden auf dem Gebiet der Lackherstellung im wesentlichen aus folgenden Gründen eingesetzt:

a) Um den Filmbildner zu dispergieren,
b) um Pigmente und Füllstoffe zu dispergieren und um
c) weitere Additive, die in Lackrezepturen enthalten sein können, beispielsweise Härtungsbeschleuniger, Verdikkungsmittel, Verlaufsmittel, Mattierungsmittel, Konservierungsmittel zu dispergieren.

Wie dem Fachmann bekannt, ist es ein allgemeines Bestreben der Lackhersteller, die Komponenten, die zur Herstellung von Lackrezepturen eingesetzt werden, in einer Form zur Verfügung zu haben, die eine einfache Handhabbarkeit gestattet. Als großer Vorteil gilt in diesem Zusammenhang, wenn eine Komponente nicht in fester, sondern in flüssiger Form vorliegt, und dabei bei Raumtemperatur (hierunter wird im Rahmen der vorliegenden Erfindung eine Temperatur von 25 °C verstanden) gießbar ist. Dies wird standardmäßig durch den Einsatz von Lösungsmitteln erreicht, wobei als Lösungsmittel im Prinzip einerseits Wasser, zum anderen organische Lösungsmittel in Betracht kommen. Nun gibt es aber Fälle, wo zum einen Wasser nicht in Betracht kommt, weil es nicht in der Lage ist, das Dispergiermittel in ausreichendem Maße zu lösen oder weil das Dispergiermittel auf Dauer in Wasser nicht stabil ist und wo zum anderen organische Lösungsmittel nicht in Betracht kommen. Der letztere Punkt ist von zunehmender Bedeutung, weil organische Lösungsmittel aus Gründen der Umweltbelastung zunehmend unattraktiv geworden sind und daher weitgehende VOC-Freiheit gewünscht ist (VOC = volatile organic compounds). Es besteht daher ein ständiges Bedürfnis, Dispergiermittel, in einer Form zur Verfügung zu haben, die die geschilderten Nachteile nicht aufweist.

**Beschreibung der Erfindung**

Aufgabe der vorliegenden Erfindung war es, Dispergator-Zusammensetzungen bereitzustellen, die aus einem Trägermedium und ein oder mehreren Dispergatoren bestehen und den folgenden Bedingungen genügen: Die Zusammensetzungen sollten bei 25 °C flüssig, homogen, konzentriert, gießbar, lagerstabil und weitgehend VOC-frei sein.
Unter "homogen" wird verstanden, daß der Dispergator homogen in dem Trägermedium verteilt ist. Unter "konzentriert" wird verstanden, daß der Dispergator zu mindestens 20 Gew.-% - bezogen auf die gesamte Zusammensetzung - enthalten ist. Unter "gießbar" wird verstanden, daß die Viskosität der Zusammensetzung - gemessen bei 25 °C nach Brookfield bei 20 Umdrehungen pro Minute unterhalb von 50000 mPas liegt. Unter "lagerstabil" wird verstanden, daß die Zusammensetzung auch bei längerer Lagerung stabil bleibt und zwar sowohl in chemischer Hinsicht (keine Zersetzung der Komponenten) als auch im Hinblick auf die Konsistenz (kein Verlust der Homogenität). Unter "weitgehend VOC-frei" wird verstanden, daß die Zusammensetzung praktisch keine flüchtigen Substanzen enthält. Dies bedeutet insbesondere, daß das Trägermedium der Zusammensetzung schwerflüchtig ist.
Das Trägermedium sollte ferner so beschaffen sein, daß keine nachteiligen Wechselwirkungen auftreten, wenn die Zusammensetzung aus Trägermedium und Dispergator zur Herstellung einer Lackrezeptur eingesetzt wird, wobei es ja zwangsläufig in Kontakt mit Filmbildnern, Pigmenten, Füllstoffen und/oder Lackadditiven kommt.
Gegenstand der Erfindung sind bei 25° C flüssige und gießbare Dispergator-Zusammensetzungen für Lackrezepturen, bestehend aus

a) 10 bis 80 Gew.-% eines Trägermediums, wobei es sich ein oder mehrere Diisobutylester von Dicarbonsäuren mit 4 bis 6 C-Atomen handelt und

b) 20 bis 90 Gew.-% eines oder mehrerer Polyurethan-Dispergatoren für Lackrezepturen.

mit der Massgabe, dass man als Komponente a) ternäre Mischungen von Diisobutylestern von Bernsteinsäure, Glutarsäure und Adipinsäure einsetzt.
Überraschenderweise wurde gefunden, daß die erfindungsgemäßen Zusammensetzungen die oben genannte Aufgabe in jeder Hinsicht ausgezeichnet lösen. Die Zusammensetzungen sind flüssig, homogen, gießbar und lagerstabil. Sie zeichnen sich ferner durch weitgehende VOC-Freiheit aus.

Der Gehalt einer Zusammensetzung an VOC kann nach dem Fachmann einschlägig bekannten Methoden betimmt werden. Im Rahmen der vorliegenden Erfindung wird unter weitgehender VOC-Freiheit ein VOC-Wert von weniger als 0,5% und vorzugsweise von weniger als 0,2 % - bezogen auf die gesamte Zusammensetzung - verstanden. Der Gehalt einer Probe an VOC dabei wird im Rahmen der vorliegenden Erfindung in Anlehnung an die DIN 75201 ("Bestimmung des Fogging-Verhaltens von Werkstoffen der Kraftfahrzeug-Innenausstattung") bestimmt und zwar durch folgendes Verfahren: Die Probe wird auf den Boden eines Bechers aus Glas ohne Ausguß mit festgelegten Maßen gebracht. Der Becher wird mit einer Aluminiumfolie abgedeckt, an der flüchtige Bestandteile aus dem Probekörper bzw. der Probe kondensieren können. Diese Aluminiumfolie wird gekühlt. Der so vorbereitete Becher wird 16 Stunden in einen auf Prüftemperatur von 100 $\pm$ 0,3 °C befindlichen Badthermostaten hineingestellt. Die Wirkung des Fogging-Niederschlages auf der Aluminiumfolie wird quantitativ durch Wägung der Folie vor und nach dem Fogging-Versuch erfaßt. Der VOC-Wert wird nach folgender Gleichung berechnet:

$$\text{VOC-Wert (\%)} = (A/B) * 100$$

Dabei bedeuten:

   A = Menge des Fogging-Niederschlages (in g)
   B = Menge der eingesetzten Probe (in g)

Darüber hinaus sind die erfindungsgemäßen Zusammensetzungen mit Filmbildnern, Pigmenten, Füllstoffen und Lackadditiven, die bei der Herstellung von Lackrezepturen üblicherweise eingesetzt werden, kompatibel.

Als Trägermedium a) besonders bevorzugt sind ternäre Mischungen von Bernsteinsäure, Glutarsäure und Adipinsäure, wie sie vom Fachmann bei der Nylonherstellung eingesetzt werden, etwa solche, die aus etwa 25 % Bernsteinsäure, 50 % Glutarsäure und 25 % Adipinsäure bestehen (jeweils Gew.-%).

Bei dem **Dispergator b)** handelt es sich um Polyurethane. Hier können an sich alle dem Fachmann einschlägig bekannten Polyurethane eingesetzt werden. In einer Ausführungsform setzt man solche dem Fachmann einschlägig bekannten Polyurethane ein, die folgenden Bausteine enthalten:

*   Oligomere, mit linearen $C_6$-$C_{18}$-Alkoholen oder mit zusätzliche tert.-Amingruppen tragenden Aminen oder Alkoholen gestartete Caprolactonblöcke,

*   mit tert.-Amingruppen substituierte Amine oder Alkohole,

*   oligomere dihydroxyterminierte Ethylenoxidblöcke (wie etwa in der EP 154 678 als besonders wirksame Dispergiermittel für organische Lacksysteme beschrieben).

Die genannten Bausteine werden, einzeln oder im Gemisch untereinander, zur Herstellung der Polyurethane mit mehrfunktionellen, bevorzugt tetrafunktionellen, Polyisocyanaten umgesetzt.

In einer bevorzugten Ausführungsform weisen die als Komponente b) einzusetzenden Verbindungen eine Löslichkeit von mindestens 20 Gew.-% in einer Mischung auf, die aus 25 Gew.-% Bernsteinsäurediisobutylester, 50 Gew.-% Glutarsäurediisobutylester und 25 Gew.-% Adipinsäurediisobutylester besteht.

Die erfindungsgemäß geeigneten Dispergatoren b) können im übrigen einzeln oder im Gemisch miteinander eingesetzt werden.

Als Polyurethane kommen insbesondere in Betracht: die nichtflüchtigen polymeren Wirkstoffe gängiger Handelsprodukte, wie beispielsweise des Disperbyk 163 der Byk-Chemie oder des Texaphor P60 und des Texaphor P63 der COGNIS Deutschland GmbH, die in Lieferform bisher ausschliesslich in flüchtigen organischen Lösemitteln wie Xylol, Butylacetat oder Methoxypropylacetat in den Handel gelangten und in dieser Form vom Anwender eingesetzt wurden.

Die erfindungsgemäß geeigneten Dispergatoren b) können einzeln oder im Gemisch miteinander eingesetzt werden.

Ein weiterer Gegenstand der Erfindung ist die

Verwendung von Dispergator-Zusammensetzungen bei der Herstellung von Lackrezepturen, **dadurch gekennzeichnet, daß** diese Dispergator-Zusammensetzungen bei 25° C flüssige und gießbar sind und aus

   a) 10 bis 80 Gew.-% eines Trägermediums, wobei es sich um ein oder mehrere Diisobutylester von Dicarbonsäuren mit 4 bis 6 C-Atomen handelt und

b) 20 bis 90 Gew.-% eines oder mehrerer Polyurethan-Dispergatoren für Lackrezepturen

bestehen.

**Beispiele**

Eingesetzte Substanzen

| | |
|---|---|
| Texaphor P 60: | Blockcopolymer aus Oligocaprolacton, Oligoethylenoxid und t-Aminogruppen tragenden Haftendgruppen (50%ige Polymerlösung in Butylacetat/Xylol - Fa. Cognis Deutschland GmbH) |
| Texaphor P 63: | Blockcopolymer aus Oligocaprolactonen, langkettigen Alkylresten und t-Aminogruppen tragenden Haftendgruppen (45%ige Polymerlösung in Methoxypropylacetat/Butylacetat - Fa. Cognis Deutschland GmbH) |
| KE 1000: | Diisobutylester eines Gemisches linearer Dicarbonsäuren mit 4 bis 6 C-Atomen (Fa. Cognis Deutschland GmbH) |

Dispergator-Zusammensetzungen

**Beispiel 1**

250,0 g Texaphor P 60 und 125,0 g KE 1000 wurden in einem 1-1-Glaskolben am Rotavapor im Vakuum (150 mbar) auf 100°C erhitzt. Nach Entfernung der Hauptmenge des Lösemittels wurde - unter Aufrechterhaltung des Vakuums von ca. 150 mbar - bis zum Erreichen der Gewichtskonstanz ein leichter Stickstoffstrom über die Reaktionsgutoberfläche geführt.

Produkt-Auswaage: 250,0 g

Charakterisierung des Produktes: Klare hellgelbe Zusammensetzung von honigartiger Konsistenz

Brookfield-Viskosität (gemessen bei 20 Upm, 25 °C, Spindel 6): 42,4 Pas.

**Beispiel 2:**

1111,1 g Texaphor P 63 und 500,1 g KE 1000 wurden in einem 1-1-Glaskolben am Rotavapor im Vakuum (150 mbar) auf 100°C erhitzt. Nach Entfernung der Hauptmenge des Lösemittels wurde - unter Aufrechterhaltung des Vakuums von ca. 150 mbar - bis zum Erreichen der Gewichtskonstanz ein leichter Stickstoffstrom über die Reaktionsgutoberfläche geführt.

Produkt-Auswaage: 1000,0 g

Charakterisierung des Produktes: Klare hellgelbe Zusammensetzung von honigartiger Konsistenz

Brookfield-Viskosität (gemessen bei 20 Upm, 25 °C, Spindel 5): 7,0 Pas.

**Patentansprüche**

1. Bei 25° C flüssige und gießbare Dispergator-Zusammensetzung für Lackrezepturen, bestehend aus

   a) 10 bis 80 Gew.-% eines Trägermediums, wobei es sich um ein oder mehrere Diisobutylester von Dicarbonsäuren mit 4 bis 6 C-Atomen handelt und
   b) 20 bis 90 Gew.-% eines oder mehrerer Polyurethan-Dispergatoren für Lackrezepturen

   mit der Maßgabe, dass man als Komponente a) ternäre Mischungen von Diisobutylestern von Bernsteinsäure, Glutarsäure und Adipinsäure einsetzt.

**2.** Verwendung von Dispergator-Zusammensetzungen bei der Herstellung von Lackrezepturen, **dadurch gekennzeichnet, daß** diese Dispergator-Zusammensetzungen bei 25° C flüssige und gießbar sind und aus

a) 10 bis 80 Gew.-% eines Trägermediums, wobei es sich um ein oder mehrere Diisobutylester von Dicarbonsäuren mit 4 bis 6 C-Atomen handelt und
b) 20 bis 90 Gew.-% eines oder mehrerer Polyurethan-Dispergatoren für Lackrezepturen

bestehen.

**Claims**

**1.** A dispersant composition for paint formulations which is liquid and pourable at 25°C and which consists of

a) 10 to 80% by weight of a carrier medium in the form of one or more diisobutyl esters of $C_{4-6}$ dicarboxylic acids and
b) 20 to 90% by weight of one or more polyurethane dispersants for paint formulations,

with the proviso that ternary mixtures of diisobutyl esters of succinic acid, glutaric acid and adipic acid are used as component a).

**2.** The use of dispersant compositions in the production of paint formulations, **characterized in that** these dispersant compositions are liquid and pourable at 25°C and consist of

a) 10 to 80% by weight of a carrier medium in the form of one or more diisobutyl esters of $C_{4-6}$ dicarboxylic acids and
b) 20 to 90% by weight of one or more polyurethane dispersants for paint formulations.

**Revendications**

**1.** Composition de dispersant liquide et pouvant être versée à 25°C pour formulations de laque, constituée par

a) 10 à 80% en poids d'un milieu support, où il s'agit d'un ou de plusieurs esters diisobutyliques d'acides dicarboxyliques comprenant 4 à 6 atomes de carbone et
b) 20 à 90% en poids d'un ou de plusieurs dispersants de polyuréthane pour formulations de laque

à condition qu'on utilise comme composant a) des mélanges ternaires d'esters diisobutyliques d'acide succinique, d'acide glutarique et d'acide adipique.

**2.** Utilisation de compositions de dispersant lors de la préparation de formulations de laque, **caractérisée en ce que** ces compositions de dispersant sont liquides et peuvent être versées à 25°C et sont constituées par

a) 10 à 80% en poids d'un milieu support, où il s'agit d'un ou de plusieurs esters diisobutyliques d'acides dicarboxyliques comprenant 4 à 6 atomes de carbone et
b) 20 à 90% en poids d'un ou de plusieurs dispersants de polyuréthane pour formulations de laque.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 154678 A